# EUROPÄISCHE PATENTSCHRIFT

(11) **EP 2 692 559 B1**
(45) Veröffentlichungstag und Bekanntmachung des Hinweises auf die Patenterteilung: **18.10.2017**
(21) Anmeldenummer: 13178376.3
(22) Anmeldetag: 29.07.2013
(51) Int. Cl.: B60H 3/06, B01D 46/00, B01D 46/10

(54) **Luftfiltereinrichtung mit Filterelement**
Air filter device with filter element
Dispositif de filtre à air avec élément filtrant

(30) Priorität: 02.08.2012 DE 102012213620
(43) Veröffentlichungstag der Anmeldung: 05.02.2014
(73) Patentinhaber: MAHLE Behr GmbH & Co. KG, 70469 Stuttgart (DE)
(72) Erfinder: Feith, Thomas, 70825 Korntal-Münchingen (DE)
(74) Vertreter: BRP Renaud & Partner mbB Rechtsanwälte Patentanwälte Steuerberater

(56) Entgegenhaltungen:
- WO-A1-2007/059824
- DE-T2- 60 206 442
- DE-U1- 20 221 005
- FR-A1- 2 741 568

## Beschreibung

Die vorliegende Erfindung betrifft eine Luftfiltereinrichtung, insbesondere für ein Fahrzeug, mit den Merkmalen des Oberbegriffs des Anspruchs 1, wie z.B. aus der WO 2007/059824A1 bekannt. Die Erfindung betrifft außerdem ein Filterelement für eine derartige Luftfiltereinrichtung.
Aus der EP 1 172 240 A2 ist eine Luftfiltereinrichtung bekannt, die in einem Gehäuse ein plattenförmiges Filterelement aufweist. Das Filterelement umfasst einen plattenförmigen Filterkörper und einen um den Filterkörper seitlich geschlossen umlaufenden Filterrahmen. Das Gehäuse besitzt eine Gehäusewand, die einen Luftströmungspfad seitlich einfasst und eine seitliche Einschuböffnung besitzt, durch die das Filterelement in das Gehäuse einsetzbar und daraus herausnehmbar ist. Da das Filterelement bei einer derartigen Luftfiltereinrichtung nach Art einer Schublade in die Einschuböffnung einschiebbar ist, kann das zugehörige Filterelement auch als Einschubfilter bezeichnet werden. Bei der bekannten Luftfiltereinrichtung ist an den Filterrahmen an einer der Einschuböffnung zugeordneten Seite ein bezüglich des Filterrahmens separater Deckel angebaut, der im eingesetzten Zustand des Filterelements die Einschuböffnung verschließt, indem er einen die Einschuböffnung einfassenden Öffnungsrand seitlich überlappt. Aus der DE 20 2005 011 733 U1 ist ein weiteres Einschubfilter dieser Art bekannt, bei dem der Deckel unmittelbar durch einen Verschlussbereich des Filterrahmens gebildet ist. Mit anderen Worten, bei diesem Filterelement wirkt ein Verschlussbereich des Filterrahmens, der die der Einschuböffnung zugeordnete Seite des Filterelements begrenzt, mit dem Öffnungsrand zum Verschließen der Einschuböffnung zusammen. Auch bei dieser Luftfiltereinrichtung überlappt der Verschlussbereich des Filterrahmens den Öffnungsrand seitlich, um die Einschuböffnung zu verschließen.

Aus der DE 198 04 452 A1 ist ein weiteres Einschubfilter bekannt, bei dem an einer der Einschuböffnung zugeordneten Seite des Filterelements ein Deckel an das Filterelement angespritzt ist. Der Deckel weist quer zur Einschubrichtung, also radial zur Einschubrichtung abstehende Vorsprünge auf, die am Öffnungsrand parallel zur Einschubrichtung, also axial zur Einschubrichtung anliegen. Am Öffnungsrand ist ein axial zur Öffnungsrichtung abstehender Umlauf ausgeformt, an dem eine Dichtung radial zur Einschubrichtung zur Anlage kommt, die am Deckel angebracht ist. Der Deckel weist außerdem eine Rastkontur auf, die im eingesteckten Zustand des Filterelements den Umlauf des Öffnungsrands an einer vom jeweiligen Vorsprung abgewandten Seite übergreift.

Weitere Einschubfilter sind aus der EP 1 391 233 A1, aus der GB 2 348 153 A, aus der US 5,494,497 und aus der DE 37 04 459 A1 bekannt.

Derartige Luftfiltereinrichtungen kommen insbesondere bei Fahrzeugen zur Versorgung eines Passagierraums mit Frischluft zum Einsatz, also vorzugsweise in einer Klimatisierungsanlage.

Die vorliegende Erfindung beschäftigt sich mit dem Problem, für eine derartige Luftfiltereinrichtung bzw. für ein zugehöriges Filterelement eine verbesserte Ausführungsform anzugeben, die sich insbesondere durch eine preiswerte Herstellbarkeit und eine einfache Handhabung auszeichnet. Außerdem soll eine ausreichende Abdichtung zwischen dem Filterelement und dem Gehäuse der Luftfiltereinrichtung realisiert werden.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, am Filterrahmen im Verschlussbereich wenigstens einen seitlich, also quer zur Einschubrichtung bzw. radial zur Einschubrichtung anschließenden Steg vorzusehen. Der Steg verfügt über eine geometrische Ausdehnung, die zumindest vor der Montage, also vor dem Einsetzen des Filterelements in das Gehäuse größer ausgebildet ist, als eine gehäuseseitige Einschuböffnung. Die Bereiche des Steges, welche die Einschuböffnung überlappen, stellen Dicht- und Befestigungsbereiche zwischen dem Filterelement und dem Gehäuse dar. Der Steg weist elastisch verformbare Bereiche auf, die über Rückstellkräfte verfügen. Diese Bereiche sind vorzugsweise aus einem elastisch verformbaren Material gebildet. Der Steg wird durch die Montage gegen das Gehäuse drückt und dabei elastisch verformt, wodurch die Rückstellkräfte eine vorgespannte Anlage erzeugen. Dadurch wird im montierten Zustand, also nach der Montage bzw. nach dem Einsetzen des Filterelements in das Gehäuse eine ausreichende Abdichtung gebildet.

Bei einem erfindungsgemäßen Ausführungsbeispiel ist im eingebauten Zustand des Filterelements dieser Steg nach außen, also vom Luftströmungspfad weggerichtet abgewinkelt, so dass er seitlich, also quer bzw. radial zur Einschubrichtung flächig an einem gehäuseseitigen Kragen zur Anlage kommt, der am Öffnungsrand absteht. Durch die flächige Kontaktierung zwischen Steg und Kragen und die im Material vorhandenen Rückstellkräfte kann bei einer geeigneten Materialkombination der Materialien von Steg und Kragen, ohne die Verwendung zusätzlicher Dichtmittel, eine hinreichende Abdichtung realisiert werden. Ferner lässt sich ein derartiger Steg besonders preiswert am Filterelement realisieren. Außerdem lässt sich das Filterelement einfach handhaben, da der jeweilige Steg beim Einschieben des Filterelements automatisch am zugehörigen Kragen flächig zur Anlage kommt.

Bei einem nicht erfindungsgemäßen Ausführungsbeispiel wird der Steg bei der Montage des Filterelementes verformt und durch die engere Einschuböffnung gedrückt. Nach dem Einschieben des Filterelementes federt der Steg wieder auf, wodurch sich die überlappenden Bereiche an die Innenwand des Gehäuses anlegen. Somit ist das Filterelement gegen Herausfallen gesichert und nach außen abgedichtet. Bei dieser Ausführung ist ein zusätzlicher elastisch verformbarer Bereich erforderlich, der ermöglicht, dass das Filterelement vollständig in die Öffnung eingesetzt werden kann und nach dem Aufbringen der Montagekraft das Filterelement in die Endlage bringt. Diese elastische Verformbarkeit kann durch ein kompressibles Element am Filterelement oder an dem Gehäuse realisiert werden. Vorzugsweise können hierzu Schaumdichtungen vorgesehen werden, die über ausreichende Rückstellkräfte verfügen. Der Steg überlappt die Einschuböffnung vorzugsweise umlaufend und kann für eine komfortablere Montage in Teilbereichen geschlitzt ausgeführt sein. Die Schlitze können hierbei vorzugsweise in Eckbereichen des Steges vorgesehen werden, wodurch eine zu starke Komprimierung des Steges, insbersondere in den Eckbereichen verhindert wird.
Das erfindungsgemäße Filterelement charakterisiert sich somit durch wenigstens einen solchen Steg, der unmittelbar am Rahmen selbst ausgebildet ist und eine seitliche Verlängerung des Verschlussbereichs des Filterrahmens bildet. Insbesondere kann der jeweilige Steg dabei integral am Verschlussbereich des Tragrahmens ausgeformt sein. Beispielsweise kann der Filterrahmen aus einem für die zu erzielende Dichtungswirkung geeigneten Material bestehen, beispielsweise aus einem Kunststoffvlies. Der Filterrahmen dient am Filterkörper zur seitlichen Begrenzung und zumindest im Einbauzustand auch zur seitlichen Abdichtung des Filtermaterials.
Der jeweilige Steg kann im nicht eingebauten Zustand seitlich, also quer zur Einschubrichtung bzw. quer zur Plattenebene des Filterelements vom Verschlussbereich des Filterrahmens abstehen und soweit flexibel sein, dass er beim Einschieben so weit abgewinkelt werden kann, vorzugsweise um etwa 90°, dass sich die flächige Kontaktierung mit dem Kragen quer zur Einschubrichtung ergibt. Insbesondere kann sich der jeweilige Steg im eingebauten Zustand somit parallel zur Einschubrichtung bzw. parallel zur Plattenebene erstrecken. Alternativ ist auch eine Ausführungsform denkbar, bei welcher der Werkstoff, aus dem der Filterrahmen und somit auch der Steg hergestellt sind, vergleichsweise steif ist, so dass der jeweilige Steg auch im nicht eingebauten Zustand nach außen, also vom Filterkörper weg gerichtet vom Filterrahmen absteht.
Das erfindungsgemäße Gehäuse zeichnet sich somit durch wenigstens einen Kragen aus, der am Öffnungsrand der Einschuböffnung nach außen, also vom Frischluftpfad weggerichtet absteht und eine flächige Kontaktzone aufweist, die eine Kontaktierung quer zur Einschubrichtung durch den jeweiligen Steg ermöglicht.

Entsprechend der Erfindung ist am jeweiligen Kragen wenigstens eine Rastlasche ausgebildet die seitlich, also quer zur Einschubrichtung federelastisch verstellbar ist und die wenigstens eine Rastkontur aufweist, die im eingebauten Zustand des Filterelements eine am jeweiligen Steg ausgebildete Gegenrastkontur hintergreift. Auf diese Weise ist das Filterelement im eingesetzten Zustand gegen ein Herausziehen gesichert. Die Verwendung wenigstens einer federelastischen Rastlasche ermöglicht dabei ein automatisches Verrasten des Filterelements am Gehäuse, sobald das Filterelement im Gehäuse seine dafür vorgesehene Position einnimmt. Hierdurch vereinfacht sich die Montage des Filterelements.
Entsprechend einer vorteilhaften Weiterbildung kann die jeweilige Rastkontur durch eine am freien Ende der jeweiligen Rastlasche ausgebildete Rastnase gebildet sein. Eine derartige Rastnase steht dabei quer zur Einschubrichtung von der jeweiligen Rastlasche ab und kann die jeweilige Gegenrastkontur formschlüssig hintergreifen.

Gemäß der Erfindung ist die jeweilige Gegenrastkontur durch ein freies Ende des jeweiligen abgewinkelten Stegs gebildet. Alternativ kann die jeweilige Gegenrastkontur durch einen Rand einer Rastöffnung gebildet sein, die den jeweiligen Steg durchdringt. Die Gegenrastkontur ist in beiden Fällen unmittelbar am jeweiligen Steg ausgebildet, wodurch die Realisierbarkeit des Filterelements besonders preiswert ist.
Bei einer anderen vorteilhaften Ausführungsform kann die jeweilige Rastlasche durch einen freigeschnittenen oder freigestellten Abschnitt des jeweiligen Kragens gebildet sein. Mit anderen Worten, die jeweilige Rastlasche ist durch einen integralen Bestandteil des Kragens gebildet, wodurch eine preiswerte Herstellbarkeit für das Gehäuse mit Kragen und Rastlasche vereinfacht ist.
Gemäß einer anderen vorteilhaften Ausführungsform kann sich der jeweilige Kragen an der jeweiligen Seite der Einschuböffnung über die gesamte Einschuböffnung erstrecken. Alternativ kann ebenso vorgesehen sein, dass sich der jeweilige Kragen an der jeweiligen Seite der Einschuböffnung nur über einen Teil der Einschuböffnung erstreckt.
Des Weiteren kann vorgesehen sein, dass nur an einer Seite der Einschuböffnung zumindest ein solcher Kragen angeordnet ist. Alternativ kann vorgesehen sein, dass zumindest an zwei sich gegenüberliegenden Seiten der Einschuböffnung jeweils wenigstens ein solcher Kragen angeordnet ist. Alternativ ist es ebenso möglich, an jeder Seite der Einschuböffnung jeweils wenigstens einen solchen Kragen anzuordnen. Bevorzugt ist die Einschuböffnung im Querschnitt rechteckig, so dass sie zwei sich gegenüberliegende lange Seite und zwei sich gegenüberliegende kurze Seiten aufweist. Vorzugsweise ist der Kragen entlang der Einschuböffnung vollständig geschlossen umlaufend ausgestaltet, so dass er sowohl Abschnitte aufweist, die sich entlang der langen Seiten gegenüberliegen, als auch Abschnitte aufweist, die sich entlang der kurzen Seiten gegenüberliegen.

Besonders zweckmäßig ist eine Ausführungsform, bei welcher der Kragen integral am Gehäuse ausgeformt ist. Das Gehäuse ist vorzugsweise ein Kunststoffspritzformteil. Durch die Integration des Kragens in die Spritzform lässt sich das Gehäuse mit integriertem Kragen besonders preiswert herstellen.

Bei einer anderen Ausführungsform kann sich der jeweilige Steg an der jeweiligen Seite des Verschlussbereichs über den gesamten Verschlussbereich erstrecken. Alternativ kann auch vorgesehen sein, dass sich der jeweilige Steg an der jeweiligen Seite des Verschlussbereichs nur über einen Teil des Verschlussbereichs erstreckt. Des Weiteren kann vorgesehen sein, dass nur an einer Seite des Verschlussbereichs zumindest ein solcher Steg angeordnet ist. Alternativ dazu kann vorgesehen sein, dass wenigstens an zwei sich gegenüberliegenden Seiten des Verschlussbereichs jeweils wenigstens ein solcher Steg angeordnet ist. Gemäß einer weiteren Alternative kann an jeder Seite des Verschlussbereichs jeweils wenigstens ein solcher Steg angeordnet sein. Zweckmäßig ist die Anordnung der Stege des Filterelements korrespondierend zur Anordnung der Kragen des Gehäuses gewählt. Vorzugsweise können somit insgesamt vier Stege vorgesehen sein, die sich jeweils über die jeweilige gesamte Seite erstrecken.

Ein besonders preiswerter Aufbau für das Filterelement ergibt sich, wenn der jeweilige Filterrahmen unmittelbar an dem aus einem Filtermaterial hergestellten Filterkörper angebracht ist, beispielsweise mittels Klebverbindung oder Schweißverbindung, und wenn der jeweilige Steg im Verschlussbereich des Filterrahmens integral am Filterrahmen ausgeformt ist. Insbesondere kann dadurch eine Ausführungsform realisiert werden, bei welcher das Filterelement insgesamt nur aus zwei Bauteilen besteht, nämlich einerseits aus dem Filterkörper, der aus einem Filtermaterial besteht, und andererseits aus dem Filterrahmen, der den jeweiligen Steg integral aufweist. Ein geeignetes Rahmenmaterial kann beispielsweise ein bei derartigen Filterelementen üblicherweise verwendetes Vlies sein.
Gemäß einer vorteilhaften Ausführungsform kann der jeweilige Steg über eine Sollknickstelle an den Filterrahmen bzw. an den jeweiligen Rahmenabschnitt des Filterrahmens anschließen. Hierdurch kann bei integraler Bauweise das Abwinkein des jeweiligen Stegs beim Einschieben des Filterelements in die Einschuböffnung vereinfacht werden, was die Montage des Filterelements erleichtert.
Ein erfindungsgemäßes Filterelement, das sich für eine Verwendung in einer Filtereinrichtung der vorstehend beschriebenen Art wird in Anspruch 12 beschrieben und besitzt somit einen plattenförmigen Filterkörper und einen Filterrahmen, der den Filterkörper zumindest an einer Seite begrenzt. Das Filterelement ist zweckmäßig durch eine Einschuböffnung, die an einem Gehäuse der Filtereinrichtung ausgebildet ist, in einer Montagerichtung in das Gehäuse einsetzbar und daraus herausnehmbar. Der Filterrahmen weist einen Verschlussbereich auf, der im eingesetzten Zustand mit einem die Einschuböffnung einfassenden Öffnungsrand zum Verschließen der Einschuböffnung zusammenwirkt und hierzu bevorzugt nur in einem der Einschuböffnung zugeordneten seitlichen Abschnitt des Filterelements vorgesehen ist. Beispielsweise ist bei einem Filterelement, das einen rechteckig umlaufenden Filterrahmen besitzt, nur eine von den insgesamt vier Seiten des Filterrahmens als Verschlussbereich ausgestaltet. Erfindungsgemäß weist der Filterrahmen im Verschlussbereich zumindest einen seitlich anschließenden Steg auf, der von einem den Filterkörper begrenzenden Rahmenabschnitt des Verschlussbereichs absteht. Dieser Steg kann nun beispielsweise im eingesetzten Zustand vom Rahmenabschnitt nach außen abgewinkelt sein und seitlich, also quer zur Montagerichtung zumindest an einem Kragen flächig anliegen, der am Öffnungsrand absteht. Alternativ kann der Steg auch weiterhin seitlich vom Rahmenabschnitt abstehen und in der Montagerichtung am Öffnungsrand anliegen, z.B. an einer Innenseite des Gehäuses.
Weitere wichtige Merkmale und Vorteile der Erfindung ergeben sich aus den Unteransprüchen, aus den Zeichnungen und aus der zugehörigen Figurenbeschreibung anhand der Zeichnungen.

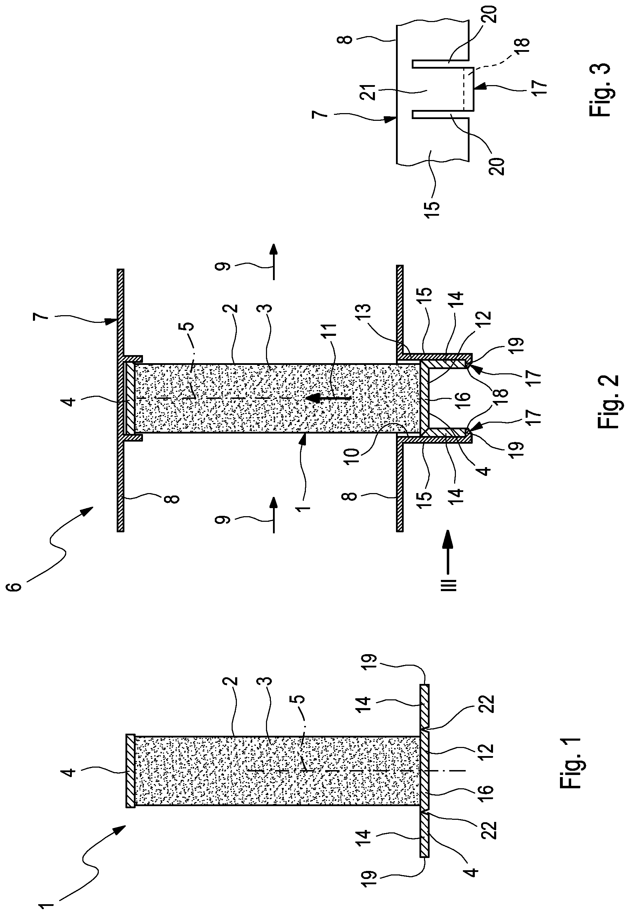

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.
Es zeigen, jeweils schematisch,
- Fig. 1: einen Längsschnitt eines Filterelements in einem nicht eingesetzten Zustand,
- Fig. 2: einen Längsschnitt einer Filtereinrichtung mit dem Filterelement in einem eingesetzten Zustand,
- Fig. 3: eine Seitenansicht eines Gehäuses der Filtereinrichtung gemäß einer Blickrichtung III in Fig. 2,
- Fig. 4: einen Längsschnitt wie in Fig. 2, jedoch bei einer nicht erfindungsgemäßen Ausführungsform in einem Zustand während der Montage des Filterelements,
- Fig. 5: einen Längsschnitt wie in Fig. 4, jedoch nach der Montage des Filterelements,
- Fig. 6: jeweils einen Querschnitt des Gehäuses entsprechend einer Schnittlinie VI in Fig. 5 bei verschiedenen nicht erfindungsgemäßen Ausführungsformen a und b,
- Fig. 7: einen Längsschnitt wie in Fig. 5, jedoch nur in einem Teilbereich der Filtereinrichtung, bei einer anderen Ausführungsform.
Entsprechend den Figuren 1, 2, 4, 5 und 7 umfasst ein Filterelement 1 einen plattenförmigen Filterkörper 2 aus einem Filtermaterial 3, wodurch das gesamte Filterelement 1 ebenfalls plattenförmig ist. Das Filtermaterial 3 kann ein Bahnenmaterial sein, das vorzugsweise gefaltet ist. Das Filterelement 1 umfasst außerdem einen Filterrahmen 4, der den Filterkörper 2 zumindest an einer Seite begrenzt. Zweckmäßig ist jedoch der Filterrahmen 4 seitlich geschlossen umlaufend am Filterkörper 2 angeordnet, so dass er den Filterkörper 2 an allen seinen umlaufenden Seiten begrenzt. Zweckmäßig ist der Filterkörper 2 rechteckförmig. Folglich ist der umlaufende Filterrahmen 4 ebenfalls rechteckförmig. Das plattenförmige Filterelement 1 erstreckt sich in einer Plattenebene 5, die sich in den Figuren senkrecht zur Zeichnungsebene erstreckt.

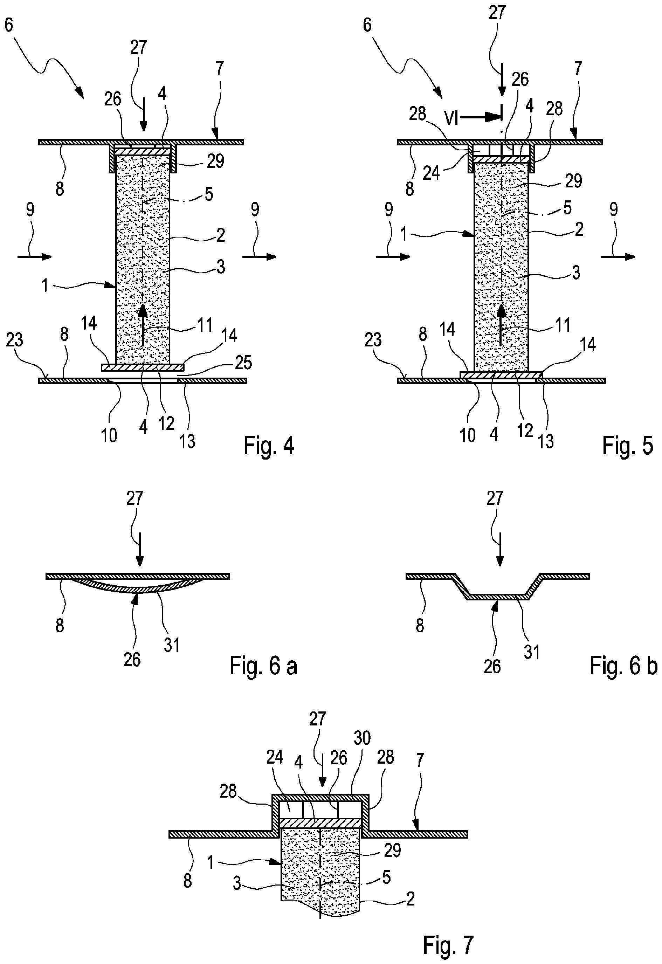

Gemäß den Figuren 2, 4 und 5 umfasst eine Luftfiltereinrichtung 6 ein Gehäuse 7, das eine Gehäusewand 8 aufweist, die einen Luftströmungspfad 9 seitlich einfasst. Das Gehäuse 7 weist in seiner Gehäusewand 8 außerdem eine Einschuböffnung 10 auf, durch die das Filterelement 1 in das Gehäuse 7 einsetzbar ist. Ebenso ist das Filterelement 1 durch diese Einschuböffnung 10 wieder aus dem Gehäuse 7 herausnehmbar. Bei den gezeigten Beispielen ist eine Einschubrichtung 11 im Wesentlichen senkrecht zur Strömungsrichtung des Luftströmungspfads 9 orientiert. Ferner ist das Filterelement 1 im eingebauten Zustand, der in den Figuren 2 und 5 wiedergegeben ist, vorzugsweise bezüglich seiner Plattenebene 5 im Wesentlichen senkrecht zur Strömungsrichtung in dem Luftströmungspfad 9 ausgerichtet.

Der Filterrahmen 4 besitzt an einer der Einschuböffnung 10 zugeordneten Seite des Filterelements 1 einen Verschlussbereich 12, der an dieser Seite das Filterelement 1 begrenzt. Dieser Verschlussbereich 12 wirkt im eingebauten Zustand gemäß den Figuren 2 und 5 mit einem Öffnungsrand 13 der Gehäusewand 8 bzw. des Gehäuses 7 zum Verschließen der Einschuböffnung 10 zusammen. Insbesondere soll der Verschlussbereich 12 im eingebauten Zustand die Einschuböffnung 10 luftdicht verschließen. Der Öffnungsrand 13 bildet eine Einfassung für die Einschuböffnung 10.

Gemäß den Figuren 1, 2, 4 und 5 weist der Filterrahmen 4 in seinem Verschlussbereich 12 zumindest einen seitlich, also quer zur Einschubrichtung 11 und quer zur Plattenebene 5 anschließenden Steg 14 auf, der zum Verschließen der Einschuböffnung 10 mit dem Öffnungsrand 13 zusammenwirkt. Dieser Steg 14 ist durch ein elastisch verformbares Material gebildet. Im nicht montierten Zustand verfügt der Steg 14 über eine geometrisch größere Ausdehnung als die Einschuböffnung 10. Somit lässt sich der Steg 14 bei der Montage elastisch verformen.

Gemäß der in den Figuren 1 bis 3 gezeigten erfindungsgemäßen Ausführungsform besitzt der Öffnungsrand 13 des Gehäuses 7 zumindest einen Kragen 15, der von der Gehäusewand 8 nach außen, also vom Luftströmungspfad 9 weggerichtet absteht. Der jeweilige Kragen 15 erstreckt sich dabei zumindest an einer Seite der Einschuböffnung 10 entlang des Öffnungsrands 13. Bei der in Figur 2 gezeigten Ausführungsform sind zwei solche Kragen 15 erkennbar, die sich entlang einander gegenüberliegender Seiten der Einschuböffnung 10 erstrecken.
Gemäß Figur 2 kann nun im eingebauten Zustand der jeweilige Steg 14 des Filterelements 1 von einem Rahmenabschnitt 16 des Verschlussbereichs 12 nach außen, also vom Filterkörper 2 weg gerichtet abgewinkelt sein und seitlich, also quer zur Einschubrichtung 11 am jeweiligen Kragen 15 flächig anliegen. Der jeweilige Rahmenabschnitt 16 ist dabei derjenige Teil des Verschlussbereichs 12 der den Filterkörper 2 begrenzt und der sich gemäß den Figuren 1 und 2 mittig zwischen den beiden Stegen 14 befindet, die andere Teile des Verschlussbereichs 12 bilden.
Gemäß den Figuren 2 und 3 ist am jeweiligen Kragen 15 zumindest eine Rastlasche 17 ausgebildet. Im Beispiel der Figur 2 sind zwei derartige Rastlaschen 17 dargestellt. Die jeweilige Rastlasche 17 ist seitlich, also quer zur Einschubrichtung 11 federelastisch verstellbar und besitzt jeweils zumindest eine Rastkontur 18. Im gezeigten Beispiel ist die jeweilige Rastkontur 18 als Rastnase ausgestaltet, die quer zur Einschubrichtung 11 von der jeweiligen Rastlasche 17 absteht. Gemäß Figur 2 hintergreift die jeweilige Rastkontur 18 im eingesetzten Zustand des Filterelements 1 eine Gegenrastkontur 19, die am jeweiligen Steg 14 ausgebildet ist. Im eingesetzten Zustand gemäß Figur 2 ist somit das Filterelement 1 mit dem Gehäuse 7 verrastet. Die Verrastung wird dabei durch das formschlüssige Zusammenwirken der jeweiligen Rastkontur 18 mit der zugehörigen Gegenrastkontur 19 gebildet. Im Beispiel der Figur 2 ist die jeweilige Gegenrastkontur 19 durch ein freies Ende des jeweiligen abgewinkelten Stegs 14 gebildet. Bei einer alternativen, hier nicht gezeigten Ausführungsform kann die jeweilige Gegenrastkontur auch durch einen Rand einer Rastöffnung gebildet sein, die den jeweiligen Steg 14 durchdringt.

Gemäß Figur 3 ist die jeweilige Rastlasche 17 durch einen freigeschnittenen bzw. freigestellten Abschnitt 21 des jeweiligen Kragens 15 gebildet. Erkennbar sind Einschnitte 20 oder Schlitze 20, die den Abschnitt 21 vom übrigen Kragen 15 freischneiden, um so die jeweilige Rastlasche 17 zu bilden.

Zweckmäßig erstreckt sich der jeweilige Kragen 15 an der jeweiligen Seite der Einschuböffnung 10 über die gesamte Einschuböffnung 10. Bevorzugt ist außerdem eine Ausführungsform, bei der an jeder Seite der bevorzugt rechteckigen Einschuböffnung 10 jeweils zumindest ein solcher Kragen 15 angeordnet ist. Grundsätzlich kann auch ein geschlossen umlaufender Kragen 15 vorgesehen sein, der sich entlang des gesamten Öffnungsrands 13 erstreckt und somit die Einschuböffnung 10 vollständig umlaufend einschließt.

Der jeweilige Kragen 15 ist vorzugsweise integral an der jeweiligen Gehäusewand 8 ausgeformt.

Komplementär zur Gestaltung der Kragen 15 bzw. des umlaufenden Kragens 15 erstreckt sich der jeweilige Steg 14 an der jeweiligen Seite des Verschlussbereichs 12 vorzugsweise über den gesamten Verschlussbereich 12. Des Weiteren ist auch hier eine Ausführungsform bevorzugt, bei der an jeder Seite des Verschlussbereichs 12 zumindest ein solcher Steg 14 vorgesehen ist. Zweckmäßig ist an allen vier Seiten des im Querschnitt rechteckigen Verschlussbereichs 12 jeweils ein sich über die jeweilige gesamte Seite erstreckender Steg 14 vorgesehen.
Gemäß einer vorteilhaften Ausführungsform sind die Stege 14 integral am Filterrahmen 4 ausgeformt. Insbesondere umfasst somit der Verschlussbereich 12 die Stege 14 und den Rahmenabschnitt 16 integral. Als Material für die Herstellung des Filterrahmens 4 kommt beispielsweise ein Vliesmaterial in Betracht. Grundsätzlich kann auch ein anderes Material, vorzugsweise ein Dichtungsmaterial zur Realisierung des Filterrahmens 4 in Betracht kommen.
Gemäß Figur 1 kann der jeweilige Steg 14 über eine Sollknickstelle 22 an den Rahmenabschnitt 16 anschließen, was das Abwinkeln der Stege 14 beim Einbauen des Filterelements 1 erleichtert. Bei der in den Figuren 1 bis 3 gezeigten Ausführungsform werden die Stege 14 beim Einsetzen des Filterelements 1 in das Gehäuse 7 jeweils etwa um 90° nach außen abgewinkelt. Im Ausgangszustand oder nicht eingebautem Zustand gemäß Figur 1 erstrecken sich die Stege 14 im Wesentlichen senkrecht zur Plattenebene 5. Im eingebauten Zustand gemäß Figur 2 erstrecken sich die Stege 14 dagegen im Wesentlichen parallel zur Plattenebene 5.

Die Figuren 4 bis 7 zeigen eine nicht erfindungsgemäße Ausführungsform der Filtereinrichtung, wobei jedoch zumindest für das Filterelement 1 ein identischer zumindest hochgradig ähnlicher Aufbau realisierbar ist wie bei der vorstehend beschriebenen Ausführungsform gemäß der Figuren 1 bis 3.
Bei der in den Figuren 4 bis 7 gezeigten Ausführungsform kommt das Gehäuse 7 am Öffnungsrand 13 ohne den oder die zuvor beschriebenen Kragen 15 aus, da bei dieser Ausführungsform die Stege 14 an einer dem Luftströmungspfad 9 zugewandten Innenseite 23 der Gehäusewand 8 zur Anlage kommen, um die Einschuböffnung 10 dicht zu verschließen. Damit das Filterelement 1 möglichst einfach so in das Gehäuse 7 eingesetzt werden kann, dass die Stege 14 im Einbauzustand an der Innenseite 23 der Gehäusewand 8 am Öffnungsrand 13 zur Anlage kommen, muss das Gehäuse 7 an einer der Einschuböffnung 10 gegenüberliegenden Seite einen Freiraum 24 aufweisen, der es ermöglicht, das Filterelement 1 gemäß Figur 4 so weit in das Gehäuse 7 einzuführen, dass die Stege 14, die beim Durchqueren der Einschuböffnung 10 zunächst nach außen umgebogen werden, wieder elastisch in ihre in den Figuren 4 und 5 wiedergegebene Ausgangslage zurückfedern können. Nach dem Zurückfedern der Stege 14 in deren Ausgangslage, in der sie sich senkrecht zur Plattenebene 5 erstrecken, entsteht gemäß Figur 4 vorübergehend ein Spalt 25 zwischen den Stegen 14 und der Gehäusewand 8 an deren Innenseite 23. Wie sich Figur 4 entnehmen lässt, wird zum Erzeugen des für die Rückstellung der Stege 14 erforderlichen Spalts 25 der gegenüberliegende Freiraum 24 weitgehend aufgebraucht.

Um das Filterelement 1 einfacher vom Zustand der Figur 4 in den Endzustand gemäß Figur 5 überführen zu können bzw. um das Filterelement 1 in diesem Endzustand halten zu können, kann eine Federeinrichtung 26 vorgesehen sein, die eine in den Figuren 4 bis 7 durch einen Pfeil angedeutete Federkraft 27 erzeugt, die der Einschubrichtung 11 entgegengesetzt wirkt. Zweckmäßig kann die Federeinrichtung 26 im Freiraum 24 angeordnet sein. Beim Einschieben des Filterelements 1 in das Gehäuse 7 wird die Federeinrichtung 26 entgegen ihrer Federkraft 27 gespannt. Anschließend kann die Federeinrichtung 26 das Filterelement 1 in den Endzustand gemäß Figur 5 antreiben und darin vorgespannt halten. Damit die Stege 14 hierbei nicht wieder so weit umgebogen werden, dass das Filterelement 1 wieder aus der Einschuböffnung 10 austritt, kann die Biegefähigkeit der Stege 14 durch entsprechende Maßnahmen richtungsabhängig gestaltet sein, so dass sie sich nach außen leichter umbiegen lassen als nach innen. Dies kann beispielsweise mittels einer Sollknickstelle in Form eines Einschnitts realisiert werden, der an der Innenseite der Stege 14 vorzusehen ist. In der Folge lassen sich die Stege 14 leichter nach außen abwinkeln als nach innen.

Gemäß Figur 5 kann der Freiraum 24 dadurch realisiert werden, dass seitliche Führungen 28 vergleichsweise tief in das Innere des Gehäuses 7 von der Gehäusewand 8 abstehen. Die Führungen 28 nehmen ein der Einschuböffnung 10 gegenüberliegendes Ende 29 des Filterelements 1 auf. Alternativ kann gemäß Figur 7 vorgesehen sein, den Freiraum 24 dadurch zu realisieren, dass die Führungen 28 durch die Seitenwände einer in die Gehäusewand 8 eingelassenen Nische 30 gebildet sind. Bei dieser Ausführungsform wird der durchströmbare Querschnitt des Gehäuses 6 nicht durch die Führungen 28 beeinträchtigt.

Gemäß den Figuren 6a und 6b kann die Federeinrichtung 26 auf unterschiedliche Weise realisiert werden. Figur 6a zeigt eine Ausführungsform, bei welcher die Federeinrichtung 26 mit Hilfe eines bezüglich des Gehäuses 7 separaten Federelements 31 realisiert wird, das auf geeignete Weise an der Gehäusewand 8 angebracht ist. Im Unterschied dazu zeigt Figur 6b eine Ausführungsform, bei welcher die Federeinrichtung 26 durch einen Federabschnitt 32 der Gehäusewand 8, also durch die Gehäusewand 8 selbst gebildet ist und dementsprechend einen integralen Bestandteil der Gehäusewand 8 bildet.

## Patentansprüche

1. Luftfiltereinrichtung, insbesondere für ein Fahrzeug,
- mit einem plattenförmigen Filterelement (1), das einen Filterkörper (2) und zumindest an einer Seite einen den Filterkörper (2) begrenzenden Filterrahmen (4) aufweist,
- mit einem Gehäuse (7), dessen Gehäusewand (8) einen Luftströmungspfad (9) seitlich einfasst und das seitlich eine Einschuböffnung (10) aufweist, durch die das Filterelement (1) in das Gehäuse (7) einsetzbar und daraus herausnehmbar ist,
- wobei im eingesetzten Zustand der Filterrahmen (4) in einem Verschlussbereich (12), der die der Einschuböffnung (10) zugeordnete Seite des Filterkörpers (2) begrenzt, mit einem die Einschuböffnung (10) einfassenden Öffnungsrand (13) zum Verschließen der Einschuböffnung (10) zusammenwirkt,
- wobei der Filterrahmen (4) im Verschlussbereich (12) zumindest einen seitlich anschließenden Steg (14) aufweist,
- wobei der Steg (14) eine geometrisch größere Ausdehnung als die Einschuböffnung (10) aufweist,
- wobei der Steg (14) elastisch verformbare Bereiche aufweist, die dicht am Gehäuse (7) anliegen,
- wobei der Öffnungsrand (13) zumindest einen Kragen (15) aufweist, der von der Gehäusewand (8) nach außen absteht und sich zumindest an einer Seite der Einschuböffnung (10) entlang des Öffnungsrands (13) erstreckt,
- wobei der Steg (14) im eingesetzten Zustand von einem den Filterkörper (2) begrenzenden Rahmenabschnitt (16) des Verschlussbereichs (12) nach außen abgewinkelt ist,
**dadurch gekennzeichnet,**
- **dass** der Steg (14) seitlich am Kragen (15) flächig anliegt,
- **dass** am Kragen (15) wenigstens eine Rastlasche (17) ausgebildet ist, die seitlich federelastisch verstellbar ist und wenigstens eine Rastkontur (18) aufweist, die im eingesetzten Zustand eine an dem Steg (14) ausgebildete Gegenrastkontur (19) hintergreift,
- **dass** die Gegenrastkontur (19) entweder durch ein freies Ende des abgewinkelten Stegs (14) gebildet ist oder durch einen Rand einer Rastöffnung gebildet ist, die den Steg (14) durchdringt.

2. Einrichtung nach Anspruch 1,
**dadurch gekennzeichnet,**
**dass** die Rastkontur durch eine am freien Ende der Rastlasche (17) ausgebildete Rastnase (18) gebildet ist.

3. Einrichtung nach Anspruch 1 oder 2,
**dadurch gekennzeichnet,**
**dass** die Rastlasche (17) durch einen freigeschnittenen oder freigestellten Abschnitt (21) des Kragens (15) gebildet ist.

4. Einrichtung nach einem der Ansprüche 1 bis 3,
**dadurch gekennzeichnet,**
- **dass** sich der Kragen (15) an der Seite der Einschuböffnung (10) nur über einen Teil der Einschuböffnung (10) erstreckt, oder
- **dass** sich der Kragen (15) an der Seite der Einschuböffnung (10) über die gesamte Einschuböffnung (15) erstreckt.

5. Einrichtung nach einem der Ansprüche 1 bis 4,
**dadurch gekennzeichnet,**
- **dass** nur an einer Seite der Einschuböffnung (10) zumindest ein solcher Kragen (15) angeordnet ist, oder
- **dass** zumindest an zwei sich gegenüberliegenden Seiten der Einschuböffnung (10) jeweils wenigstens ein solcher Kragen (15) angeordnet ist, oder
- **dass** an jeder Seite der Einschuböffnung (10) jeweils wenigstens ein solcher Kragen (15) angeordnet ist.

6. Einrichtung nach einem der Ansprüche 1 bis 5,
**dadurch gekennzeichnet,**
**dass** sich der Kragen (15) geschlossen umlaufend entlang der Einschuböffnung (10) erstreckt.

7. Einrichtung nach einem der Ansprüche 1 bis 6,
**dadurch gekennzeichnet,**
- **dass** sich der Steg (14) an der Seite des Verschlussbereichs (12) nur über einen Teil des Verschlussbereichs (12) erstreckt, oder
- **dass** sich der Steg (14) an der Seite des Verschlussbereichs (12) über den gesamten Verschlussbereich (12) erstreckt.

8. Einrichtung nach einem der Ansprüche 1 bis 7,
**dadurch gekennzeichnet,**
- **dass** nur an einer Seite des Verschlussbereichs (12) zumindest ein solcher Steg (14) angeordnet ist, oder
- **dass** wenigstens an zwei sich gegenüberliegenden Seiten des Verschlussbereichs (12) jeweils wenigstens ein solcher Steg (14) angeordnet ist, oder
- **dass** an jeder Seite des Verschlussbereichs (12) jeweils wenigstens ein solcher Steg (14) angeordnet ist.

9. Einrichtung nach einem der Ansprüche 1 bis 8,
**dadurch gekennzeichnet,**
**dass** der jeweilige Steg (14) über eine Sollknickstelle (22) an den Rahmenabschnitt (16) anschließt.

10. Einrichtung nach einem der Ansprüche 1 bis 9,
**dadurch gekennzeichnet,**
**dass** am Verschlussbereich (4) separate Stege (14) vorgesehen sind, die sich jeweils über die gesamte Seite des Verschlussbereichs (12) erstrecken.

11. Einrichtung nach einem der Ansprüche 1 bis 10,
**dadurch gekennzeichnet,**
**dass** der jeweilige Steg (14) integral am Verschlussbereich (12) des Filterrahmens (4) ausgeformt ist.

12. Filterelement für eine Filtereinrichtung (6) nach einem der Ansprüche 1 bis 11,
- mit einem plattenförmigen Filterkörper (2),
- mit einem Filterrahmen (4), der den Filterkörper (2) zumindest an einer Seite begrenzt,
- wobei das Filterelement (1) durch eine Einschuböffnung (10), die an einem Gehäuse (7) der Filtereinrichtung (6) ausgebildet ist und die zumindest einen von der Gehäusewand (8) nach außen abstehenden und sich zumindest an einer Seite der Einschuböffnung (10) entlang des Öffnungsrands (13) erstreckenden Kragen (15) aufweist, in das Gehäuse (7) einsetzbar und daraus herausnehmbar ist,
- wobei der Filterrahmen (4) einen Verschlussbereich (12) aufweist, der im eingesetzten Zustand mit einem die Einschuböffnung (10) einfassenden Öffnungsrand (13) zum Verschließen der Einschuböffnung (10) zusammenwirkt,
- wobei der Filterrahmen (4) im Verschlussbereich (12) zumindest einen seitlich anschließenden Steg (14) aufweist, der von einem den Filterkörper (2) begrenzenden Rahmenabschnitt (16) des Verschlussbereichs (12) absteht,
**dadurch gekennzeichnet,**
- **dass** der Steg (14) bei in das Gehäuse (7) eingesetztem Filterelement (1) seitlich am Kragen (15) flächig anliegt,
- **dass** im eingesetzten Zustand wenigstens eine am Kragen (15) ausgebildete Rastlasche (17), die seitlich federelastisch verstellbar ist und wenigstens eine Rastkontur (18) aufweist, eine an dem Steg (14) ausgebildete Gegenrastkontur (19) hintergreift,
- **dass** die Gegenrastkontur (19) entweder durch ein freies Ende des abgewinkelten Stegs (14) gebildet ist oder durch einen Rand einer Rastöffnung gebildet ist, die den Steg (14) durchdringt.

## Claims

1. Air filter device, in particular for a vehicle,
- having a disc-shaped filter element (1) with a filter body (2) and filter frames (4) adjacent to the filter body (2) on at least one side,
- having a housing (7), the side of the housing wall (8) of which borders an air flow pathway (9) and has an insertion opening (10) through which the filter element (1) can be placed in the housing (7) and removed from said housing,
- whereby during use the filter frame (4) interacts with an opening edge (13) which borders the insertion opening (10) to close the insertion opening (10) in a locking area (12) which is adjacent to the side of the insertion opening (10) which faces the filter body (2),
- whereby the filter frames (4) have at least one laterally attached bar (14) in the locking area (12),
- whereby the bar (14) has geometrically larger dimensions than the insertion opening (10),
- whereby the bar (14) has elastically deformable areas which lie very closely to the housing (7),
- whereby the opening edge (13) has at least one collar (15) which protrudes outwards from the housing wall (8) and extends on at least one side of the insertion opening (10) along the opening edge (13),
- whereby the bar (14) is bent outwards during use by a frame section (16) of the locking area (12) which is adjacent to the filter body (2),
**characterised in that**
- the bar (14) lies flat on the side of the collar (15),
- and **in that** at least one snap-in latch (17), the sides of which are elastically adjustable and which has at least one snap-in contour (18), is formed on the collar (15), said snap-in latch engaging behind a counter snap-in contour (19) formed on the bar (14)
- and **in that** the counter snap-in contour (19) is either formed by a free end of the bent bar (14) or is formed by an edge of a snap-in opening which penetrates the bar (14).

2. Device according to claim 1,
**characterised in that**
the snap-in contour is formed by a snap-in nose (18) on the free end of the snap-in latch (17).

3. Device according to either claim 1 or 2,
**characterised in that**
the snap-in latch (17) is formed by a freely cut or freely provided section (21) of the collar (15).

4. Device according to any one of claims 1 to 3,
**characterised in that**
- on the side of the insertion opening (10) the collar (15) only extends over part of the insertion opening (10),
- or **in that** on the side of the insertion opening (10) the collar (15) extends over the entire insertion opening (15)

5. Device according to any one of claims 1 to 4,
**characterised in that**
- at least one collar (15) of this type is arranged on just one side of the insertion opening (10),
- or **in that** at least one collar (15) of this type is arranged on at least two opposing sides of the insertion opening (10),
- or **in that** at least one collar (15) of this type is arranged on each side of the insertion opening (10).

6. Device according to any one of claims 1 to 5,
**characterised in that**
the collar (15) extends in a continuously closed manner along the insertion opening (10).

7. Device according to any one of claims 1 to 6,
**characterised in that**
- on the side of the locking area (12) the bar (14) only extends over part of the locking area (12), or **in that**
- on the side of the locking area (12) the bar (14) extends over the entire locking area (12).

8. Device according to any one of claims 1 to 7,
**characterised in that**
- at least one bar (14) of this type is arranged on just one side of the locking area (12),
- or **in that** at least one bar (14) of this type is arranged on at least two opposing sides of the locking area (12),
- or **in that** at least one bar (14) of this type is arranged on each side of the locking area (12).

9. Device according to any one of claims 1 to 8,
**characterised in that**
the respective bar (14) is connected to the section of the frame (16) by means of a predetermined bending point (22).

10. Device according to any one of claims 1 to 9,
**characterised in that**
separate bars (14) are provided in the locking area (4) which each extend over the entire length of the locking area (12).

11. Device according to any one of claims 1 to 10,
**characterised in that**
the respective bar (14) is formed in one piece on the locking area (12) of the filter frame (4).

12. Filter element for a filter device (6) according to any one of claims 1 to 11,
- having a disc-shaped filter body (2),
- having a filter frame (4) which is adjacent to the filter body (2) on at least one side,
- whereby the filter element (1) can be placed in the housing (7) and removed again through an insertion opening (10) that is formed on a housing (7) of the filter device (6) and which has at least one collar (15) which protrudes outwards from the housing wall (8) and extends on at least one side of the insertion opening (10) along the opening edge (13),
- whereby the filter frame (4) has a locking area (12) which interacts with an opening edge (13) which borders the insertion opening (10) to close the insertion opening (10) during use,
- whereby the filter frame (4) has at least one laterally attached bar (14) which protrudes from a frame section (16) of the locking area (12) which is adjacent to the filter body (2),
**characterised in that**
- the bar (14) lies flat on the side of the collar (15) when the filter element (1) is placed in the housing (7),
- and **in that** during use at least one snap-in latch (17) formed on the collar (15), the sides of which snap-in latch are elastically adjustable and which has at least one snap-in contour (18), engages behind a counter snap-in contour (19) formed on the bar (14),
- and **in that** the counter snap-in contour (19) is either formed by a free end of the bent bar (14) or is formed by an edge of a snap-in opening which penetrates the bar (14).

## Revendications

1. Dispositif de filtre à air, en particulier pour un véhicule,
- avec un élément de filtre (1) en forme de plaque, qui présente un corps de filtre (2) et au moins au niveau d'un côté un cadre de filtre (4) délimitant le corps de filtre (2),
- avec un boîtier (7), dont la paroi de boîtier (8) encadre latéralement un chemin d'écoulement d'air (9) et qui présente latéralement une ouverture d'introduction par glissement (10), par laquelle l'élément de filtre (1) peut être inséré dans le boîtier (7) et en être retiré,
- dans lequel, dans l'état inséré, le cadre de filtre (4) coopère, dans une zone de fermeture (12) qui délimite le côté associé à l'ouverture d'introduction par glissement (10) du corps de filtre (2), avec un bord d'ouverture (13) encadrant l'ouverture d'introduction par glissement (10) afin de fermer l'ouverture d'introduction par glissement (10),
- dans lequel le cadre de filtre (4) présente, dans la zone de fermeture (12), au moins une traverse (14) située dans le prolongement latéralement,
- dans lequel la traverse (14) présente une extension plus grande sur le plan géométrique que l'ouverture d'introduction par glissement (10),
- dans lequel la traverse (14) présente des zones pouvant être déformées élastiquement, lesquelles reposent de manière étanche au niveau du boîtier (7),
- dans lequel le bord d'ouverture (13) présente au moins un collet (15), qui fait saillie vers l'extérieur de la paroi de boîtier (8) et qui s'étend le long du bord d'ouverture (13) au moins au niveau d'un côté de l'ouverture d'introduction par glissement (10),
- dans lequel la traverse (14) est coudée vers l'extérieur dans l'état inséré par une section de cadre (16), délimitant le corps de filtre (2), de la zone de fermeture (12),
**caractérisé en ce**
- **que** la traverse (14) repose à plat latéralement au niveau du collet (15),
- **qu'**au moins une bride d'enclenchement (17) est réalisée au niveau du collet (15), laquelle peut être ajustée latéralement de manière élastique et présente au moins un contour de blocage (18), qui vient en prise par l'arrière, dans l'état inséré, avec un contre-contour de blocage (19) réalisé au niveau de la traverse (14),
- **que** le contre-contour de blocage (19) est formé soit par une extrémité libre de la traverse (14) coudée soit par un bord d'une ouverture d'encliquetage, qui traverse la traverse (14).

2. Dispositif selon la revendication 1,
**caractérisé en ce**
**que** le contour de blocage est formé par un ergot d'encliquetage (18) réalisé au niveau de l'extrémité libre de la bride d'enclenchement (17).

3. Dispositif selon la revendication 1 ou 2,
**caractérisé en ce**
**que** la bride d'encliquetage (17) est formée par une section (21) dégagée par découpage ou laissée découverte du collet (15).

4. Dispositif selon l'une quelconque des revendications 1 à 3,
**caractérisé en ce**
- **que** le collet (15) s'étend au niveau du côté de l'ouverture d'introduction par glissement (10) seulement sur une partie de l'ouverture d'introduction par glissement (10), ou
- **que** le collet (15) s'étend au niveau du côté de l'ouverture d'introduction par glissement (10) sur l'ensemble de l'ouverture d'introduction par glissement (15).

5. Dispositif selon l'une quelconque des revendications 1 à 4,
**caractérisé en ce**
- **qu'**au moins un collet (15) de ce type est disposé seulement au niveau d'un côté de l'ouverture d'introduction par glissement (10), ou
- **que** respectivement au moins un collet (15) de ce type est disposé au moins au niveau de deux côtés se faisant face de l'ouverture d'introduction par glissement (10), ou
- **que** respectivement au moins un collet (15) de ce type est disposé au niveau de chaque côté de l'ouverture d'introduction par glissement (10).

6. Dispositif selon l'une quelconque des revendications 1 à 5,
**caractérisé en ce**
**que** le collet (15) s'étend de manière fermée en périphérie le long de l'ouverture d'introduction par glissement (10).

7. Dispositif selon l'une quelconque des revendications 1 à 6,
**caractérisé en ce**
- **que** la traverse (14) s'étend au niveau du côté de la zone de fermeture (12) seulement sur une partie de la zone de fermeture (12), ou
- **que** la traverse (14) s'étend au niveau du côté de la zone de fermeture (12) sur l'ensemble de la zone de fermeture (12).

8. Dispositif selon l'une quelconque des revendications 1 à 7,
**caractérisé en ce**
- **qu'**au moins une traverse (14) de ce type est disposée seulement au niveau d'un côté de la zone de fermeture (12),
- **que** respectivement au moins une traverse (14) de ce type est disposée au moins au niveau de deux côtés se faisant face de la zone de fermeture (12), ou
- **que** respectivement au moins une traverse (14) de ce type est disposée au niveau de chaque côté de la zone de fermeture (12).

9. Dispositif selon l'une quelconque des revendications 1 à 8,
**caractérisé en ce**
**que** la traverse (14) respective est située dans le prolongement de la section de cadre (16) par l'intermédiaire d'un point d'inflexion théorique (22).

10. Dispositif selon l'une quelconque des revendications 1 à 9,
**caractérisé en ce**
**que** sont prévues, au niveau de la zone de fermeture (4), des traverses (14) séparées qui s'étendent respectivement sur tout le côté de la zone de fermeture (12).

11. Dispositif selon l'une quelconque des revendications 1 à 10,
**caractérisé en ce**
**que** la traverse (14) respective est formée d'un seul tenant au niveau de la zone de fermeture (12) du cadre de filtre (4).

12. Elément de filtre pour un dispositif de filtre (6) selon l'une quelconque des revendications 1 à 11,
- avec un corps de filtre (2) en forme de plaque,
- avec un cadre de filtre (4), qui délimite le corps de filtre (2) au moins au niveau d'un côté,
- dans lequel l'élément de filtre (1) peut être inséré dans le boîtier (7) et en être retiré par une ouverture d'introduction par glissement (10), qui est réalisée au niveau d'un boîtier (7) du dispositif de filtre (6) et qui présente au moins un collet (15) faisant saillie vers l'extérieur de la paroi de boîtier (8) et s'étendant au moins au niveau d'un côté de l'ouverture d'introduction par glissement (10) le long du bord d'ouverture (13),
- dans lequel le cadre de filtre (4) présente une zone de fermeture (12) qui coopère, dans l'état inséré, avec un bord d'ouverture (13) encadrant l'ouverture d'introduction par glissement (10) afin de fermer l'ouverture d'introduction par glissement (10),
- dans lequel le cadre de filtre (4) présente, dans la zone de fermeture (12), au moins une traverse (14) située dans le prolongement latéralement, laquelle fait saillie d'une section de cadre (16), délimitant le corps de filtre (2), de la zone de fermeture (12),
**caractérisé en ce**
- **que** la traverse (14) repose à plat latéralement au niveau du collet (15) lorsque l'élément de filtre (1) est inséré dans le boîtier (7),
- **que** dans l'état inséré, au moins une bride d'encliquetage (17) réalisée au niveau du collet (15), laquelle peut être ajustée latéralement de manière élastique et qui présente au moins un contour de blocage (18), vient en prise par l'arrière avec un contre-contour de blocage (19) réalisé au niveau de la traverse (14),
- **que** le contre-contour de blocage (19) est formé soit par une extrémité libre de la traverse (14) coudée soit par un bord d'une ouverture d'encliquetage, qui traverse la traverse (14).
